# EUROPEAN PATENT APPLICATION

(11) **EP 4 763 850 A1**
(43) Date of publication of application: **24.06.2026**
(21) Application number: 24220710.8
(22) Date of filing: 17.12.2024
(51) Int. Cl.: C07F 9/09, C08F 30/02

(54) **COMPOSITION COMPRISING A PHOSPHOROUS-CONTAINING METHACRYLATE AND 2,4-DIMETHYL-6-TERT-BUTYLPHENOL**

(71) Applicant: Evonik Operations GmbH, 45128 Essen (DE)
(72) Inventor: WALTER, Kristine, 64354 Reinheim (DE); BLEITH, Tim, 55131 Mainz (DE); SAAL, Doris, 64625 Bensheim (DE); CLAMER, Elisabeth, 64289 Darmstadt (DE); SAG, Jacob, 60314 Frankfurt (DE)
(74) Representative: Evonik Patent Association

(57) **Abstract**

The present invention relates to a stable monomer composition comprising a phosphorous-containing methacrylate and 2,4-dimethyl-6-tert-butylphenol.

## Description

The present invention relates to a stable monomer composition comprising a phosphorous-containing methacrylate and 2,4-dimethyl-6-tert-butylphenol.

### Background of the Invention

Phosphorous-containing (meth)acrylates are well known adhesion promoters in applications like adhesives or coating resins providing improved adhesion to polar substrates. Additionally, these phosphorous-containing (meth)acrylates can improve the corrosion protection of coating formulations due to the improved adhesion to the substrate. Furthermore, phosphorous-based compounds are well known to improve flame-retardant properties. The incorporation of phosphorus-containing (meth)acrylates into polymeric resins leads to the formation of flame-retardant materials.

Often in these applications like adhesives, coatings or polymeric resins a certain optical transparency is required. Therefore it is critical that the ingredients of these materials e.g. the phosphorous-containing (meth)acrylates are not colored. However, due to the acidic nature of the phosphorous-containing (meth)acrylates the color level can increase upon longer storage periods.

A second critical point in the handling and storage of phosphorous-containing (meth)acrylates is the fact that these monomers can polymerize under the acidic conditions if they are not stabilized in a proper way. In general, phenolic stabilizers are used to stabilize (meth)acrylic monomers. However, we observed that these phenolic stabilizers are decomposed under the acidic conditions of the phosphorous-containing (meth)acrylates upon storage quickly.

It was an object of the present invention to provide a long-term stable composition containing phosphorous-containing (meth)acrylates and to avoid loss of the stabilizer and color increase over time.

### State of the art

In general, phosphorous-containing (meth)acrylates are stabilized with the commonly used stabilizer 2,6-di(tert-butyl)-4-methylphenol (BHT) or 4-methoxyphenol (MEHQ).

As a result of this invention, it was unexpectedly found that a synergistic mixture of alkylated phenols that consists mainly of 2,4-dimethyl-6-tert-butylphenol shows improved stability over 2,6-di(tert-butyl)-4-methylphenol (BHT) and 4-methoxyphenol (MEHQ) in a phosphorous-containing (meth)acrylate mixture and that this mixture is having a better color stability over time. This is surprising because the chemical structures only differ from each other by the substitution pattern of the phenolic ring unit (two methyl groups in the 2- and 4-position and one tert-butyl group in the 6-position for 2,4-dimethyl-6-tertbutylphenol versus two tert-butyl groups in the 2- and 6-position and a methyl group in the 4-position for BHT versus one methoxy group in the 4-position for MEHQ).

In general, 2,4-dimethyl-6-tert-butylphenol is a less commonly used phenolic stabilizer. It is described in the state of the art as stabilizer for different mixtures, however in no example it is used in an acidic monomer mixture.

### Detailed description of the invention

A first object of the present invention is directed to a composition, consisting of:
(a) 70 wt% to 100 wt% of a phosphorous-containing (meth)acrylate;
(b) 0 wt% to 30 wt% of methyl methacrylate; and
(c) 1 ppm to 500 ppm, preferably 5 ppm to 300 ppm, of 2,4-dimethyl-6-tert-butylphenol.

The content of each component (a) and (b) is based on the total weight of the composition. In a particular embodiment, the proportions of components (a) and (b) add up to 100% by weight.

The amount of 2,4-dimethyl-6-tert-butylphenol (c) is added as top-treat based on the total amount of the components (a) and (b).

The phosphorous-containing (meth)acrylate (a) for use in accordance with the invention is selected from the general formula (I) 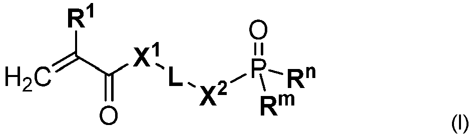 wherein
**R¹** denotes H or methyl,
**R^{m}** denotes O⁻ or OH,
**Rⁿ** denotes O⁻, OH, **Z, X²**-P(=O)**R**ⁿ⁺¹**R**^{m+1},
**n, m** independently denotes an integer of 2-15,
**X¹, X²** independently denote O, CH₂, S, NH, 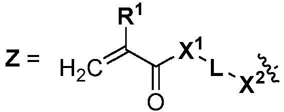 and
L denotes a hydrocarbon linker optionally comprising one or more heteroatoms.

The linker moiety connects the phosphorus unit with the ethylenically unsaturated, polymerizable monomer unit.

As used in the context of the present invention, the term "hydrocarbon linker" includes linker being linear and/or branched aliphatic (e.g. alkyl or alkenyl), alicyclic (e.g. cycloalkyl, cycloalkenyl), and aromatic with aromatic, aliphatic, alicyclic-substituted aromatic substituents, as well as cyclic substituents wherein the ring is completed through another portion of the molecule (e.g. two substituents forming one ring together).

The term "hydrocarbon linker" includes a linker with substituted hydrocarbon substituents, that is, substituents containing non-hydrocarbon groups which do not alter the predominantly hydrocarbon nature of the linker (e.g. chloro, fluoro, bromo, iodo, hydroxy, alkoxy, mercapto, alkylmercapto, alkylhydroxy, nitro, amino, nitroso, sulfoxy).

The term "hydrocarbon linker" also includes a linker with hetero substituents, that is, substituents which, while having a predominantly hydrocarbon character, contain other heteroatoms than carbon in a ring or chain otherwise composed of carbon atoms. Also included are ethylene oxide (EO) and propylene oxide (PO) linkers. Heteroatoms include sulfur, oxygen, nitrogen, and encompass substituents as pyridyl, furyl, imidazolyl and other heterocycles.

The hydrocarbon linker may be a C0-60 hydrocarbon linking group having oxygen and/or nitrogen and/or sulfur atoms substituted for carbon atoms.

The linker may for instance be **X**¹(CH₂CH₂O)ₓ-P (**X²** = O in this case) with **x** = 1-20.

In one embodiment of the present invention, the phosphorous-containing (meth)acrylate (a) is selected from the general formula (Ia) 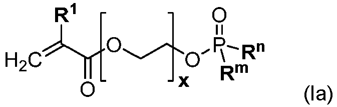 wherein
**R¹** denotes H or methyl,
**Rⁿ, R^{m}** independently denote O⁻, OH, **Z,** O-P(=O)**R**ⁿ⁺¹**R**^{m+1},
**n,** m independently denote an integer of 2-15,
**x** denotes an integer of 1-20, 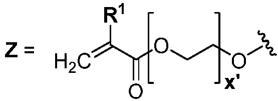 and
**x'** denotes an integer of 1-20,
optionally in the presence of H₃PO₄, H₄P₂O₇, their salts as well as acyclic/cyclic (poly)phosphates and their salts, and methyl (meth)acrylate.

The polyphosphate moiety may contain mono-, di-, tri- or higher phosphate, or a mono- and/or diphosphonate.

The phosphorous-containing (meth)acrylate (a) is preferably a hydroxy-C2-3-alkyl (meth)acrylate phosphate, more preferably 2-hydroxyethyl methacrylate phosphate (HEMA-P).

As another example, the phosphorous-containing (meth)acrylate (a) may contain 70 wt% of phosphate components and 30 wt% of methyl methacrylate.

As another example, the phosphorous-containing (meth)acrylate (a) may contain 100 wt% of phosphate components and 0 wt% of methyl methacrylate.

Often, commercially available precursor molecules are mixtures, such as, for example, Sipomer^{®} PAM-4000 or PAM-100 or PAM-200 (commercially available from Syensqo) or VISIOMER^{®} HEMA-P 70M / 100 (commercially available from Evonik).

Such mixtures are contemplated herein, as well as precursor monomer units that are pure. Such monomers (e.g. PAM-4000 from Syensqo) can be made directly from HEMA and P₂O₅ or (poly)phosphoric acid. Alternatively, other monomers such as hydroxypropyl (meth)acrylate or 4-hydroxybutyl (meth)acrylate could be used in place of HEMA. Other examples include polyethylene glycol (meth)acrylate (poly)phosphate ester (PAM-100 from Syensqo) and polypropylene glycol (meth)acrylate (poly)phosphate ester (PAM-200 from Syensqo).

The compositions comprising a phosphorous-containing (meth)acrylate and methyl methacrylate can be prepared by:
- using a corresponding amount of methyl methacrylate as solvent during the synthesis of the phosphorous-containing (meth)acrylate; or
- diluting the phosphorous-containing (meth)acrylate subsequently with a corresponding amount of methyl methacrylate.

The 2,4-dimethyl-6-tert-butylphenol is usually used as a synergistic mixture of alkylated phenols that mainly consists of 2,4-dimethyl-6-tert-butylphenol.

A further object of the present invention is directed to a composition 1, consisting of:
(a1) 70 wt% of a phosphorous-containing (meth)acrylate;
(b1) 30 wt% of methyl methacrylate; and
(c1) 40 ppm to 200 ppm of 2,4-dimethyl-6-tert-butylphenol.

The content of each component (a1) and (b1) is based on the total weight of the composition. In a particular embodiment, the proportions of components (a1) and (b1) add up to 100% by weight.

The amount of 2,4-dimethyl-6-tert-butylphenol (c1) is added as top-treat based on the total amount of the components (a1) and (b1).

A further object of the present invention is directed to a composition **2,** consisting of:
(a2) 100 wt% of a phosphorous-containing (meth)acrylate;
(b2) 0 wt% of methyl methacrylate; and
(c2) 10 ppm to 250 ppm of 2,4-dimethyl-6-tert-butylphenol.

The content of each component (a2) and (b2) is based on the total weight of the composition. In a particular embodiment, the proportions of components (a2) and (b2) add up to 100% by weight.

The amount of 2,4-dimethyl-6-tert-butylphenol (c2) is added as top-treat based on the total amount of the components (a2) and (b2).

The phosphorous-containing (meth)acrylate is preferably 2-hydroxyethyl methacrylate phosphate (HEMA-P).

A further object of the present invention is directed to a method of stabilizing a phosphorous-containing (meth)acrylate, the method comprising the step of preparing a phosphorous-containing (meth)acrylate of general formula (I) as hereinbefore defined in the presence of 1 ppm to 500 ppm, preferably 5 ppm to 300 ppm, of 2,4-dimethyl-6-tert-butylphenol.

The phosphorous-containing (meth)acrylate used in the method is preferably 2-hydroxyethyl methacrylate phosphate (HEMA-P), prepared from reacting 2-hydroxyethyl methacrylate (HEMA) with phosphorous pentoxide.

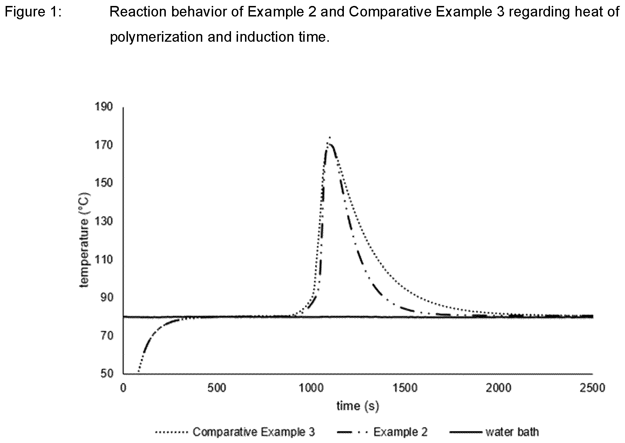

Figure 1 shows the reaction behavior of Example 2 and Comparative Example 3 regarding heat of polymerization and induction time.

The present invention is intended to be described in more detail below using the examples and comparative examples, without this giving rise to any restriction.

### Experimental Part

### Abbreviations

- BHT: 2,6-di-(tert-butyl)-4-methylphenol
- HEMA: 2-hydroxyethyl methacrylate
- HEMA-P: 2-hydroxyethyl methacrylate phosphate
- IONOL^{®} K78: synergistic mixture of alkylated phenols, mainly 2,4-dimethyl-6-tert-butylphenol
- MEHQ: 4-methoxyphenol
- MMA: methyl methacrylate

The following chemicals were used for the preparation of the HEMA-P samples:
HEMA 98 from the company Röhm, phosphorous pentoxide from the company ABCR GmbH, BHT from the company Klaus Busche Chemie GmbH, MEHQ from the company Specialty Operations France, IONOL^{®} K78 from the company Oxiris Chemicals, MMA from the company Röhm.

### Analytical methods

### Determination of color number

The color number was determined by the means of the process explained in detail in US 2004/186311 (determination of color by the platinum-cobalt scale; also called APHA number).

This process was developed based on DIN EN ISO 6271. In accordance with the present invention, a Cary 100 UV/VIS spectrometer from Agilent Technologies with filters for the range of 460 and 620 nm was used.

### Determination of the stabilizer content

The stabilizer content was determined by HPLC using following equipment and parameter:

| | |
|---|---|
| Detector: | ELCD |
| Column: | Knauer Eurospher 150x3mm 100-5 C18 |
| Eluent: | methanol p.a. : phosphate buffer pH2 = 75 : 25 vol% |
| Flow, pressure: | 1 mL/minute |
| Injected volume: | 6 µL |

The stabilizer was quantified by external calibration.

### Preparation of HEMA-P

For the reaction, a 2L round bottom flask with 5 openings was used. The flask was equipped with a saber stirrer, reflux cooler, Pt100 temperature sensor, data logger and an air inlet. An Erlenmeyer flask with silicone hose was also connected to the apparatus for manual phosphorous pentoxide dosage. The reaction was cooled using a dry ice/water bath.

### Comparative example 1: HEMA-P stabilized with BHT

HEMA 98 (664 g, 5.00 mol, 1.94 equivalents) and BHT (0.21 g, 200 ppm, based on the total amount of HEMA and phosphorous pentoxide used) were mixed together in the 2L round bottom flask and the mixture was cooled to 10°C. Phosphorous pentoxide (366 g, 2.58 mol, 1.00 equivalents) was charged into the Erlenmeyer flask and dosed into the reaction mixture manually in several portions. The temperature during dosage did not exceed 15°C. After complete dosage, the reaction mixture was stirred for another 10 minutes and afterwards, it was heated to 40°C for 1.5 hours. The reaction mixture was cooled to room temperature. After keeping the mixture as is over night, distilled water (27.8 g, 1.55 mol, 0.60 equivalents) was added under stirring at room temperature. The mixture was heated again to 40°C for 2.5 hours and afterwards cooled to room temperature. The sample was prepared by decanting the liquid from the residual solids.

The desired product was retrieved with a yield of > 98%.

### Comparative Example 2: HEMA-P stabilized with BHT and MEHQ

The sample was prepared according to the procedure for comparative example 1. In addition to the added BHT, the HEMA 98 was pre-stabilized with 200 ppm of MEHQ.

### Example 1: HEMA-P stabilized with IONO^{®}L K78

The sample was prepared according to the procedure for comparative example 1, but IONOL^{®} K78 (0.21 g, 200 ppm) was used as stabilizer instead of BHT.

### Comparative Example 3: HEMA-P mixture in MMA stabilized with BHT

The sample was prepared using the reaction mixture of comparative example 1 by diluting it with 30 weight% MMA.

As an alternative, the HEMA-P mixture in MMA can also be prepared according to the procedure for comparative example 1 which is carried out in the presence of a corresponding amount of MMA during the reaction.

### Comparative Example 4: HEMA-P mixture in MMA stabilized with BHT and MEHQ

The sample was prepared using the reaction mixture of comparative example 2 by diluting it with 30 weight% MMA. After the sample was prepared, MEHQ content was determined to be only 70 ppm and was increased afterwards with additional 130 ppm to result into 200 ppm.

### Example 2: HEMA-P mixture in MMA stabilized with IONOL^{®} K78

The sample was prepared using the reaction mixture of example 1 by diluting it with 30 weight% MMA.

As an alternative, the HEMA-P mixture in MMA can also be prepared according to the procedure for comparative example 1 which is carried out in the presence of a corresponding amount of MMA during the reaction.

### Storage Stability

For the determination of the efficiency of BHT, MEHQ and IONOL^{®} K78 in HEMA-P storage tests were conducted. The samples were stored in a laboratory convection oven at 30°C and 50°C, respectively. After certain periods of time (1, 2, 3, 6 months), the stabilizer content as well as the color of the samples were analyzed.

Based on the results of the storage test, it is evident that IONOL^{®} K78 decomposes slower at both temperatures for all HEMA-P samples compared to BHT and MEHQ. Additionally, IONOL^{®} K78 leads to a slower color increase in the HEMA-P samples during storage.

The following Tables 1-11 show the stability data received with the Examples and Comparative Examples.

**Table 1: Comparative Example 1 (stabilization with BHT and storage at 30°C)**

| **Storage Stability at 30°C** | **month** | **0** | **1** | **2** | **3** | **6** |
|---|---|---|---|---|---|---|
| | | | | | | |
| **Color [APHA number]** | | 100 | 330 | 524 | 638 | 727 |
| **Stabilizer BHT [ppm]** | | 183 | 114 | 53 | 17 | <1 |

**Table 2: Comparative Example 1 (stabilization with BHT and storage at 50°C)**

| **Storage Stability at 50°C** | **month** | **0** | **1** | **2** | **3** | **6** |
|---|---|---|---|---|---|---|
| | | | | | | |
| **Color [APHA number]** | | 100 | 725 | 720 | 769 | 785 |
| **Stabilizer BHT [ppm]** | | 183 | 2 | <1 | <1 | <1 |

**Table 3: Comparative Example 2 (stabilization with BHT and MEHQ and storage at 30°C)**

| **Storage Stability at 30°C** | **month** | **0** | **1** | **2** | **3** | **6** |
|---|---|---|---|---|---|---|
| | | | | | | |
| **Color [APHA number]** | | 48 | 230 | - | 295 | 305 |
| **Stabilizer BHT [ppm]** | | 65 | 21 | - | 7 | 2 |
| **Stabilizer MEHQ [ppm]** | | 85 | 43 | - | 24 | 16 |

The sample polymerized after 6 months of storage.

**Table 4: Comparative Example 2 (stabilization with BHT and MEHQ and storage at 50°C)**

| **Storage Stability at 50°C** | **month** | **0** | **1** | **2** | **3** | **6** |
|---|---|---|---|---|---|---|
| | | | | | | |
| **Color [APHA number]** | | 48 | 335 | - | 475 | 511 |
| **Stabilizer BHT [ppm]** | | 65 | <1 | - | <1 | <1 |
| **Stabilizer MEHQ [ppm]** | | 85 | 20 | - | 5 | 2 |

The sample polymerized after 6 months of storage.

**Table 5: Example 1 (stabilization with IONOL^{®} K78 and storage at 30°C)**

| **Storage Stability at 30°C** | **month** | **0** | **1** | **2** | **3** | **6** |
|---|---|---|---|---|---|---|
| | | | | | | |
| **Color [APHA number]** | | 113 | 205 | 265 | 295 | 500 |
| **Stabilization Ionol^{®} K78 [ppm]** | | 179 | 169 | 176 | 158 | 114 |

**Table 6: Example 1 (stabilization with IONOL^{®} K78 and storage at 50 °C)**

| **Storage Stability at 50°C** | **month** | **0** | **1** | **2** | **3** | **6** |
|---|---|---|---|---|---|---|
| | | | | | | |
| **Color [APHA number]** | | 113 | 507 | 697 | 779 | 883 |
| **Stabilization Ionol^{®} K78 [ppm]** | | 179 | 114 | 88 | 51 | 15 |

**Table 7: Comparative Example 3 (stabilization with BHT and storage at 30°C)**

| **Storage Stability at 30°C** | **month** | **0** | **1** | **2** | **3** | **6** |
|---|---|---|---|---|---|---|
| | | | | | | |
| **Color [APHA number]** | | 54 | 93 | 121 | 156 | 297 |
| **Stabilizer BHT [ppm]** | | 139 | 129 | 119 | 106 | 67 |

**Table 8: Comparative Example 3 (stabilization with BHT and storage at 50°C)**

| **Storage Stability at 50°C** | **month** | **0** | **1** | **2** | **3** | **6** |
|---|---|---|---|---|---|---|
| | | | | | | |
| **Color [APHA number]** | | 54 | 210 | 315 | 400 | 591 |
| **Stabilizer BHT [ppm]** | | 139 | 81 | 49 | 34 | <1 |

**Table 9: Comparative Example 4 (stabilization with BHT and MEHQ and storage at 50°C)**

| **Storage Stability at 50°C** | **month** | **0** | **1** | **2** | **3** | **6** |
|---|---|---|---|---|---|---|
| | | | | | | |
| **Color [APHA number]** | | 151 | 310 | - | 503 | 683 |
| **Stabilizer BHT [ppm]** | | 47 | 26 | - | 8 | <1 |
| **Stabilizer MEHQ [ppm]** | | 191 | 55 | - | 11 | 2 |

**Table 10: Example 2 (stabilization with IONOL^{®} K78 and storage at 30°C)**

| **Storage Stability at 30°C** | **month** | **0** | **1** | **2** | **3** | **6** |
|---|---|---|---|---|---|---|
| | | | | | | |
| **Color [APHA number]** | | 56 | 91 | 109 | 122 | 185 |
| **Stabilization Ionol^{®} K78 [ppm]** | | 124 | 125 | 134 | 123 | 114 |

**Table 11: Example 2 (stabilization with IONOL^{®} K78 and storage at 50°C)**

| **Storage Stability at 50°C** | **month** | **0** | **1** | **2** | **3** | **6** |
|---|---|---|---|---|---|---|
| | | | | | | |
| **Color [APHA number]** | | 56 | 176 | 240 | 295 | 425 |
| **Stabilization Ionol^{®} K78 [ppm]** | | 124 | 116 | 118 | 109 | 90 |

### Reactivity

The influence of the stabilizers on the reactivity of HEMA-P was investigated by carrying out the polymerization at 80°C with 0.2 wt% tert-butyl-2-ethyl peroxy hexanoate and measuring the heat of polymerization.

Compared to BHT, IONOL^{®} K78 showed no significant change in the reaction behavior regarding heat of polymerization or induction time (see Figure 1).

## Claims

1. Composition, comprising:
(a) 70 wt% to 100 wt% of a phosphorous-containing (meth)acrylate of general formula (I) 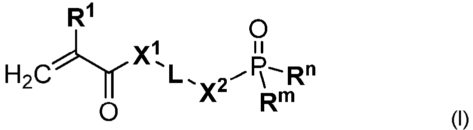 wherein
**R¹** denotes H or methyl,
**R^{m}** denotes O⁻ or OH,
**Rⁿ** denotes O⁻, OH, **Z, X**²-P(=O)**R**ⁿ⁺¹**R**^{m+1},
**n, m** independently denotes an integer of 2-15,
**X¹, X²** independently denote O, CH₂, S, NH, 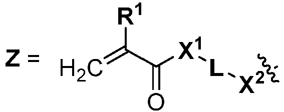 and
**L** denotes a hydrocarbon linker optionally comprising one or more heteroatoms;
(b) 0 wt% to 30 wt% of methyl methacrylate; and
(c) 1 ppm to 500 ppm, preferably 5 ppm to 300 ppm, of 2,4-dimethyl-6-tert-butylphenol.

2. The composition according to claim 1, wherein the phosphorous-containing (meth)acrylate (a) is selected from the general formula (Ia) 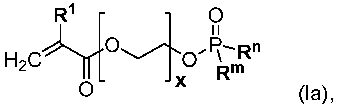 wherein
**R¹** denote H or methyl,
**Rⁿ, R^{m}** independently denote O⁻, OH, **Z,** O-P(=O)**R**ⁿ⁺¹**R**^{m+1},
**n, m** independently denote an integer of 2-15,
**x** denotes an integer of 1-20, 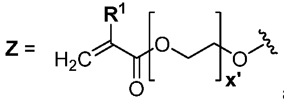 and
**x'** denotes an integer of 1-20,
optionally in the presence of H₃PO₄, H₄P₂O₇, their salts as well as acyclic/cyclic (poly)phosphates and their salts, and methyl (meth)acrylate.

3. The composition according to claim 1 or 2, wherein the phosphorous-containing (meth)acrylate (a) is a hydroxy-C2-3-alkyl (meth)acrylate phosphate, more preferably 2-hydroxyethyl methacrylate phosphate (HEMA-P).

4. The composition according to claim 1 or 2, consisting of:
(a1) 70 wt% of a phosphorous-containing (meth)acrylate, preferably 2-hydroxyethyl methacrylate phosphate (HEMA-P);
(b1) 30 wt% of methyl methacrylate; and
(c1) 40 ppm to 200 ppm of 2,4-dimethyl-6-tert-butylphenol.

5. The composition according to claim 1 or 2, consisting of:
(a2) 100 wt% of a phosphorous-containing (meth)acrylate, preferably 2-hydroxyethyl methacrylate phosphate (HEMA-P); and
(c2) 10 ppm to 250 ppm of 2,4-dimethyl-6-tert-butylphenol.

6. A method of stabilizing a phosphorous-containing (meth)acrylate of general formula (I), the method comprising the step of preparing a phosphorous-containing (meth)acrylate of general formula (I) as defined in claim 1 in the presence of 1 ppm to 500 ppm, preferably 5 ppm to 300 ppm, of 2,4-dimethyl-6-tert-butylphenol.

7. The method according to claim 6, wherein the phosphorous-containing (meth)acrylate is 2-hydroxyethyl methacrylate phosphate (HEMA-P).
